# EUROPÄISCHE PATENTSCHRIFT

(11) **EP 0 735 501 B1**
(45) Veröffentlichungstag und Bekanntmachung des Hinweises auf die Patenterteilung: **18.09.2002**
(21) Anmeldenummer: 96103880.9
(22) Anmeldetag: 12.03.1996
(51) Int. Cl.: G06K 7/10, G06K 7/12

(54) **Farbsensoranordnung zum Lesen farbiger Markierungen**
Colour sensor arrangement for reading colour marks
Arrangement de détecteurs de couleur pour lire des marquages en couleur

(30) Priorität: 27.03.1995 DE 29505165 U
(43) Veröffentlichungstag der Anmeldung: 02.10.1996
(73) Patentinhaber: SICK AG, 79183 Waldkirch (DE)
(72) Erfinder: Alt, Gerhard, D-79350 Sexau (DE); Dreher, Hubertus, D-79215 Elzach (DE); Hirt, Günter, D-77716 Haslach (DE)
(74) Vertreter: Finsterwald, Martin, Dr.

(56) Entgegenhaltungen:
- EP-A- 0 319 769
- DE-A- 4 108 916
- DE-C- 3 242 219
- DE-C- 3 311 352
- US-A- 4 838 697
- PATENT ABSTRACTS OF JAPAN vol. 011, no. 035 (P-542), 3. Februar 1987 & JP 61 204782 A (FUJI ELECTRIC CO LTD), 10. September 1986

## Beschreibung

Die Erfindung betrifft eine Farbsensoranprdnung zum Lesen farbiger Markierungen nach dem Oberbegriff des Anspruches 1. Besonders bevorzugt werden derartige Farbsensoranordnungen zum Lesen farbiger Druckmarken in kurzeih Arbeitsabstand verwendet. Die Farbsensoranordnung ist aber auch für viele weitere Anwendungen geeignet. Hinzuweisen ist hier auf die Auftragskontrolle bzw. - überwachung von Spendevorgängen (Sicherungslack), Banderolen-, Etikettenoder Markierungserkennung sowie die Überwachung von Beschichtungsprozessen. In Frage kommt die Anwendung auch bei der Anwesenheitsprüfung von Gegenständen. Im allgemeinen werden zwei Versionen mit 10 mm oder 60 mm Tastabstand zur Verfügung gestellt.

Bei einem bekannten optischen Markenerkennungsgerät (DE 32 42 219 Cl) weist der Lichtsender zwei wahlweise einschaltbare Lichtquellen auf, welche Lichtbündel unterschiedlicher Spektralzusammensetzung aussenden. Ein halbdurchlässiger Spiegel lenkt die Lichtbündel beider Lichtquellen auf einen gemeinsamen optischen Weg.

Das Ziel der Erfindung besteht darin, eine derartige Farbsensoranordnung so weiterzubilden, dass sie mit bestehenden Kontrasttastem kurzer Tastweite kompatibel sind und die Gehäuseabmessungen eines Kontrasttasters nach Möglichkeit beibehalten werden, d.h., dass die größere Anzahl von optischen und optoelektronischen Bauelementen bei einer Farbsensoranordnung auf möglichst kleinem Raum untergebracht ist, wobei aber die hohen Anforderungen an die Präzision der Anordnung der optischen und optoelektronischen Bauelemente voll erfüllt werden.

Zur Lösung dieser Aufgabe sind die Merkmale des kennzeichnenden Teils des Anspruches 1 vorgesehen.

Erfindungsgemäß wird also mit einer Autokollimationsanordnung gearbeitet, wobei zur Reduzierung des optischen Übersprechens ein geometrischer Strahlteiler verwendet wird. Auf diese Weise wird auch das optische Übersprechen durch Verschmutzung der nach außen liegenden Objektivlinsenfläche innerhalb des Beleuchtungskegels infolge der vorzugsweise zentral auftretenden Abschattung reduziert. Weiter werden hierdurch alle wichtigen Bauelemente zu einer einzigen kompakten Anordnung in präziser Weise zusammengefasst.

Zur Reduzierung des optischen Übersprechens wird weiter vorzugsweise das Objektiv beidseitig über die gesamte spektrale Bandbreite der verwendeten Halbleiterstrahlungsquellen entspiegelt.

Die gezielte Verwendung von leistungsstarken LED's mit kleinem Abstrahlwinkel als Halbleiterstrahlungsquellen hat zur Folge, dass die Sendeöffnung im Vergleich zur Empfangsöffnung deutlich kleiner ausgebildet sein kann. Insofern bietet der erfindungsgemäß verwendete Strahlteiler auch erhebliche Vorteile in der Leistungsbilanz.

Der geometrische Strahlteiler ist vorteilhaft gemäß Anspruch 2 ausgebildet, wobei zweckmäßig lediglich derjenige zentrale Bereich der Platte mit einem Spiegelbelag versehen ist, der von dem schmalen Sendelichtbündel der Halbleiterstrahlungsquellen getroffen wird oder die Sendelichtbündel der Halbleiterstrahlungsquellen durch die Platte hindurchgehen, während das Empfangslicht vom Spiegelbelag zur Empfangsanordnung ausgespiegelt wird.

Eine baulich besonders kompakte Anordnung wird durch die Maßnahmen nach Anspruch 3 erzielt. Auf diese Weise werden die Vorteile der Verwendung von dichroitischen Spiegeln bei baulicher Kompaktheit erzielt.

Besonders vorteilhaft ist eine Ausbildung mit drei Halbleiterstrahlungsquellen in den drei Grundfarben, welche zweckmäßig nach Anspruch 4 angeordnet sind, um einerseits eine kompakte Unterbringung und andererseits gleiche optische Wege für die Strahlungen der verschiedenen Halbleiterstrahlungsquellen zu erzielen.

Durch die Maßnahme nach Anspruch 5 wird vorteilhafterweise eine Konzentration des Sendelichtes auf dem Strahlteiler erzielt, was einerseits einer exakten geometrischen Strahlungstrennung und andererseits einer günstigen Energiebilanz zugutekommt, wobei auch ein randscharfer Bildpunkt auf den mit den Markierungen versehenen Gegenstand erzielt wird.

Von besonderem Vorteil ist die Ausbildung nach Anspruch 6, weil hierdurch alle wichtigen Bauelemente zu einer einzigen kompakten Anordnung in präziser Weise zusammengefasst werden.

Für die Montage ist die Ausbildung nach Anspruch 7 von Vorteil, weil dann die einzelnen Bauelemente vor dem Aufbringen des Deckels von der offenen Seite her in geeignet angeordnete Nuten in den als Präzisions-Spritzgußteil hergestellten Tubus mit Aufnahmeansatz eingeschoben und so präzise angeordnet werden können, um anschließend durch Aufbringen des Deckels in dieser Präzisionsanordnung der einzelnen Bauelemente fixiert zu werden. Durch das Aufbringen des Deckels entsteht ein geschlossener Kasten, der lediglich fünf seitliche Öffnungen für die drei LED's, den Empfänger und das Objektiv enthält.

Insbesondere für die Montage ist die Rechteckform der meisten optischen und optoelektronischen Bauelemente gemäß Anspruch 8 zweckmäßig. Kreisförmige Linsen können durch Ausbildung nach Anspruch 9 in dieses System einbezogen werden.

Die kompakte Ausbildung der erfindungsgemäßen Farbsensoranordnung wird weiter durch die Ausbildung nach Anspruch 10 gefördert. Erfindungsgemäß wird also der durch das gegenüber dem Empfangslichtbündel schmälere Sendelichtbündel frei werdende Platz für die Unterbringung der Leiterplatten genutzt.

Weitere zweckmäßige Ausführungsformen der Erfindung entnimmt man den Ansprüchen 11 und 12.

Die Erfindung wird im folgenden beispielsweise anhand der Zeichnung beschrieben; in dieser zeigt:
- Fig. 1: eine schematische teilweise geschnittene und teilweise blockschaltbildartige Darstellung einer erfindungsgemäßen Farbsensoranordnung,
- Fig. 2: eine vergrößerte Schnittansicht des optischen Teils der erfindungsgemäßen Farbsensoranordnung,
- Fig. 3: eine schematische Vorderansicht des Gegenstandes der Fig. 2 in Richtung des Pfeiles III ohne das Objektiv und
- Fig. 4: die Draufsicht einer kreisförmigen Linse mit rechteckförmigen Ansätzen.

In allen Figuren bezeichnen gleiche Bezugszahlen entsprechende Bauelemente.

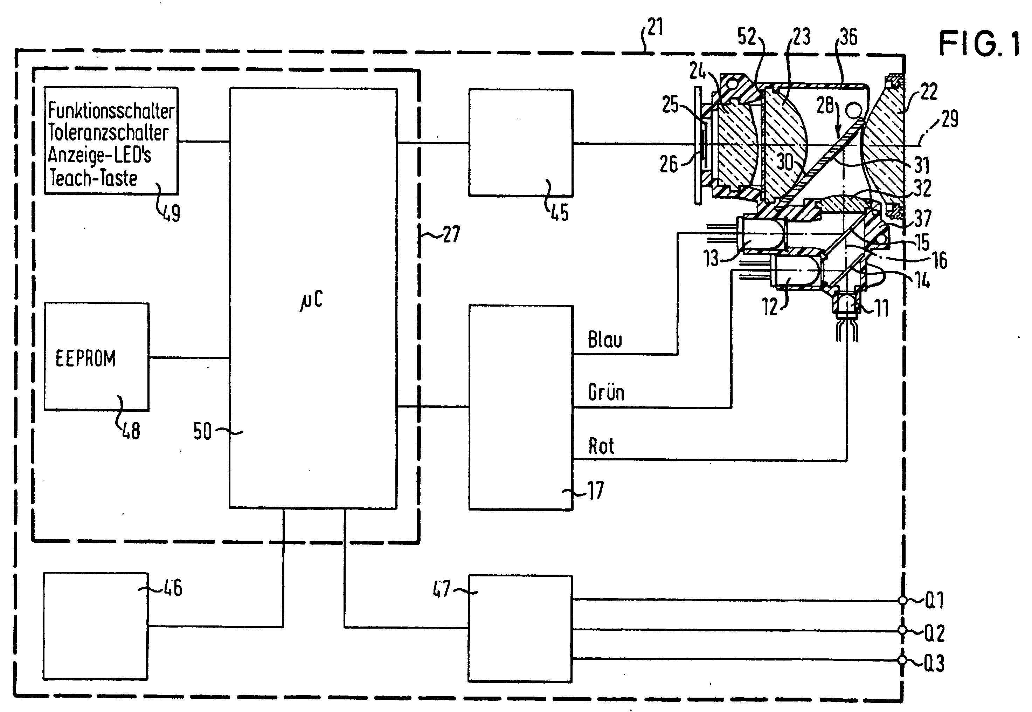

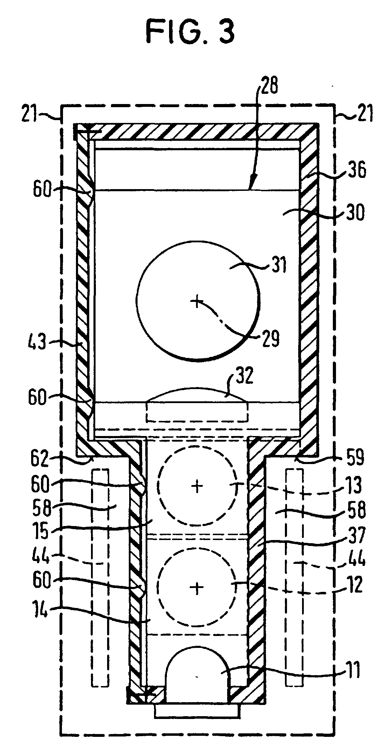

Nach den Fig. 1 bis 3 ist das Kernstück der erfindungsgemäßen Farbsensoranordnung ein Tubus 36 mit einem unteren Aufriahmeansatz 37, die in einem quaderförmigen Gehäuse 21 aus Metall angeordnet sind, welches in geeigneter Weise geöffnet werden kann, um die optischen, optoelektronischen und elektronischen Bauelemente einbringen zu können. Der Tubus 36 und der Aufnahmeansatz 37 sind vorzugsweise als einheitliches Präzisions-Spritzgußbauteil ausgebildet. Sie weisen nach Fig. 3 im wesentlichen die Form eines einseitig offenen Kastens auf, der durch einen Deckel 43 verschlossen ist. Der Aufnahmeansatz 37 ist jedoch deutlich schmäler als der Tubus 36 ausgebildet, so daß am Übergang vom Aufnahmeansatz 37 zum Tubus 36 der Kasten eine Stufe 59 und der Deckel 43 eine Stufe 62 aufweist.

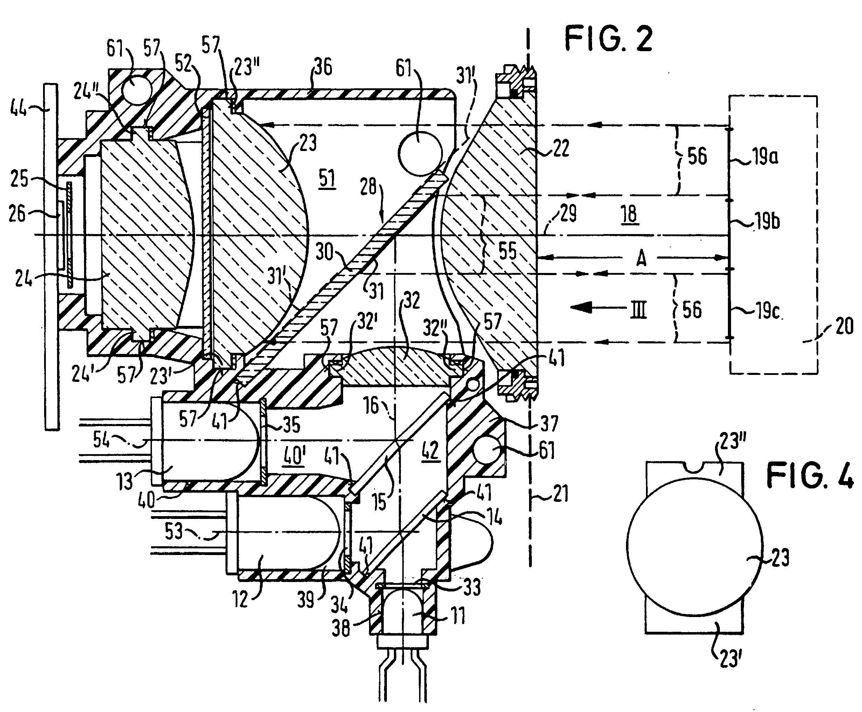

Der Tubus 36 weist einen an beiden Enden offenen zentralen Hohlraum 51 auf, in welchem in Fig. 2 von links nach rechts gesehen hintereinander untergebracht sind: ein Photoelement 26, eine Kreisringblende 25, eine Linse 24, ein IR-Sperrfilter 52, eine weitere Linse 23 mit größerem Durchmesser und ein unter 45° zur Achse 29 des Kondensorlinsensystems 23, 24 bzw. des Tubus 36 geneigte transparente planparallele Platte 30, die im Bereich des Durchstoßpunktes der Achse 29 und um diese herum auf der vom Kondensorlinsensystem 23, 24 abgewandten Seite mit einem Spiegelbelag 31 bedeckt ist. Die Platte 30 mit dem Spiegelbelag 31 bildet einen geometrischen Strahlteiler 28.

Bei einer alternativen Ausführungsform ist ein in Fig. 2 nur gestrichelt angedeuteter kreisringförmiger Spiegelbelag 31' auf der entgegengesetzten Seite wie der Spiegelbelag 31 vorgesehen. Er deckt diejenigen Bereiche der Platte 30 ab, die beim in ausgezogenen Linien wiedergegebenen Ausführungsbeispielen nach Fig. 2 durchlässig sind, während bei der alternativen Ausführungsform der zentrale Bereich, der nach Fig.2 durch den Spiegelbelag 31 abgedeckt ist, durchlässig ist.

Auf der vom Kondensorlinsensystem 23, 24 abgewandten Seite des Strahlteilers 28 befindet sich ein Front-Objektiv 22, welches in einer Stirnwand des nur gestrichelt angedeuteten Gehäuses 21 eingebaut ist.

In der unteren Wand des Tubus 36 ist unterhalb des Spiegelbelages 31 eine Kollimatorlinse 32 angeordnet, an die nach unten der Hohlraum 42 des mit dem Tubus 36 einstückigen Aufnahmeansatzes 37 anschließt.

Unter der Kollimatorlinse 32 sind auf deren optischer Achse 16 im vertikalen Abstand zwei dichroitische Umlenkspiegel 14 bzw. 15 unter einem Winkel von 45° zur Achse 16 angeordnet. Die dichroitischen Spiegel 14, 15 sind durch geeignete Halterungen 41 (Fig. 2) an den Außenwänden des Hohlraums 42 gehalten.

Hinter den dichroitischen Spiegeln 14, 15 sind in Richtung des Linsensystems 23, 24 an den Hohlraum 42 anschließende Aufnahmeräume 39 bzw. 40, 40' vorgesehen, in denen Halbleiterstrahlungsquellen 12 bzw. 13 z.B. für die Farben grün und blau befestigt sind.

In Ausrichtung mit der Achse 16 ist unterhalb des dichroitischen Spiegels 14 ein Aufnahmeraum 38 für eine weitere Halbleiterstrahlungsquelle 11 ausgebildet, welche beispielsweise Licht im roten Spektralbereich aussendet.

Unmittelbar vor den Halbleiterstrahlungsquellen 11, 12, 13 sind jeweils Lochblenden 33, 34 bzw. 35 in den Aufnahmehohlräumen 38, 39, 40 angeordnet, welche konzentrisch mit der Achse 16 bzw. den Achsen 53, 54 der Halbleiterstrahlungsquellen 12, 13 sind. Die Öffnungen der Lochblenden 38, 39, 40 sind bei geringeren Tastabständen A (Fig. 2) entsprechend den zu erkennenden Druckmarken rechteckförmig und bei größeren Tastabständen A kreisförmig.

Vor dem Objektiv 22 bzw. dem Gehäuse 21 befindet sich ein Lesebereich 18, in welchem sich ein mit unterschiedlichen Farbmarkierungen 19a, 19b bzw. 19c versehener Gegenstand 20 befindet, dessen Farbmarkierungen von der erfindungsgemäßen Farbsensoranordnung gelesen bzw. erkannt werden sollen.

Die dichroitischen Spiegeln 14, 15, der geometrische Strahlteiler 28 und der IR-Sperrfilter 52 haben Rechteckform. Die Linsen 23, 24 und 32 sind von runder Bauform und besitzen an zwei Seiten rechteckförmige Ansätze 23', 23" (Fig. 2 und 4), 24', 24" und 32', 32", die jedoch zur optischen Abbildung nicht beitragen, sondern eine reine Halterungsfunktion ausüben. Alle zuvorgenannten Komponenten und auch die Lochblenden 33, 34, 35 werden von der offenen Seite her in Halterungsnuten 41 bzw. 57 eingeführt und bis auf Anschlag hineingeschoben. Der Deckel 43 enthält im Bereich der jeweiligen optischen Komponente entsprechende Anschlagausformungen 60 (Fig. 3), die in den Tubus 36 bzw. den Aufnahmeansatz 37 hineinreichen und an das jeweilige optische Element angrenzen, so daß nach vollständiger Bestückung des Tubus 36 und des Aufnahmeansatzes 37 und das saubere Schließen des Deckels 43 eine korrekte Position der optischen Komponenten gewährleistet ist.

Das Objektiv 22 ist kreisförmig ausgebildet und in die Wand des vorzugsweise aus Metall bestehenden Gehäuses 21 eingesetzt. Der Tubus 36 und der Aufnahmeansatz 37 sind mittels Paßbohrungen 61 und nicht dargestellter, am Gehäuse 21 vorgesehener Paßzapfen definiert zum Gehäuse 21 ausgerichtet.

Die vorzugsweise aus Glas bestehende Platte 30 dient lediglich als Träger für den Umlenk-Spiegelbelag 31 bzw. 31' und garantiert die korrekte Lage des Umlenkspiegels im Strahlengang. Nach Fig. 2 endet die Glasplatte 30 oben deutlich unterhalb des oberen Endes des Tubus, um eine kompakte Relativanordnung des Tubus 36 und des Objektivs 22 zu ermöglichen. Um störende Reflexe zu vermeiden, wird insbesondere die obere Stirnseite der Platte 30 geschwärzt.

Das Linsensystem 23, 24 ist deswegen zweistufig aufgebaut, weil bei der vorliegenden großen Linsenöffnung eine kurze Brennweite realisiert werden soll.

Nach Fig. 1 ist das Photoelement 26 über einen Vorverstärker 45 an eine Auswerteelektronik 27 angeschlossen, die einen Mikroprozessor 50, ein EEPROM 48 und ein Bedienungsfeld 49 mit Funktionsschalter, Toleranzschalter, Anzeige-LED's und einer Teach-Taste aufweist. Die Auswerteelektronik 27 wird von einem Netzteil 46 gespeist. Eine an den Mikroprozessor 50 angeschlossene Ausgangsstufe 47 liefert die Ausgangssignale der Farbsensoranordnung an Ausgangsklemmen Q1, Q2 und Q3.

Die Signale an den Ausgangsklemmen Q1 bis Q3 stellen drei Schaltausgänge dar. Die Farbsensoranordnung ist insgesamt derart ausgelegt, daß bis zu drei verschiedene Farbmuster pro Teach-In gespeichert werden können, d.h. daß der Sensor Sortiervorgänge bezüglich drei unterschiedlicher Farben vornehmen kann. Der entsprechende Schaltausgang Q1, Q2 bzw. Q3 wird bei Übereinstimmung durch die Elektronik entsprechend aktiviert.

Die Halbleiterstrahlungsquellen 11, 12, 13 sind an eine Ansteuerungselektronik 17 angeschlossen, die ihrerseits mit dem Mikroprozessor 50 verbunden ist.

Nach Fig. 3 sind die in Fig. 1 in einem nur schematischen, ausgedehnten Blockschaltbild gezeigten elektrischen und elektronischen Bauelemente auf nur gestrichelt angedeuteten Leiterplatten 44 angeordnet, welche in sehr kompakter Bauweise seitlich des Aufnahmeansatzes 37 in Räumen 58 des quaderförmigen Gehäuses 21 untergebracht sind. Eine weitere Leiterplatte 44 kann auch gemäß Fig. 2 unmittelbar hinter dem Photoelement 26 flach an der in Fig. 2 linken Stirnseite des Tubus 36 angeordnet sein.

Die exakte Anordnung und Dimensionierung insbesondere der optischen und optoelektronischen Bauelemente ergeben sich aus der folgenden Funktionsbeschreibung.

Die Halbleiterstrahlungsquellen 11, 12, 13 werden von der Ansteuerungselektronik 17 sequentiell angesteuert, derart, daß zunächst die Halbleiterstrahlungsquelle 11 ein rotes Lichtbündel, dann die Halbleiterstrahlungsquelle 12 ein grünes Lichtbündel und schließlich die Halbleiterstrahlungsquelle 13 ein blaues Lichtbündel entlang der Achsen 16, 53 bzw. 54 aussenden. Durch den Mikroprozessor 50 werden Impulsbreiten kleiner als 10 µs generiert.

Die nacheinander erzeugten Lichtbündel der Halbleiterstrahlungsquellen 11, 12 bzw. 13 werden mittels der dichroitischen Spiegel 14, 15 auf die gemeinsame optische Achse 16 gelenkt, wobei durch geeignete Länge der Aufnahmehohlräume 38, 39 bzw. 40, 40' dafür gesorgt wird, daß die von den Halbleiterstrahlungsquellen 11, 12 bzw. 13 ausgehende Strahlung bis zur Kollimatorlinse 32 gleiche Wegstrecken zurücklegen.

Die verwendeten Halbleiterstrahlungsquellen 11, 12, 13 weisen erfindungsgemäß kleine Abstrahlwinkel auf, so daß eng begrenzte Strahlungsbündel ausgesendet werden, die durch die Kollimatorlinse 32 weiter auf den Spiegelbelag 31 des Strahlteilers 23 konzentriert wird. Am Strahlteiler 28 erfolgt eine Umlenkung der Sende-Lichtbündel um 90° in Richtung der optischen Achse 29 des Objektivs 22. Auf diese Weise geht vom Objektiv 22 ein Sendelichtbündel 55 aus.

Die Kollimatorlinse 32 und das Objektiv 22 bilden die unmittelbar vor den Halbleiterstrahlungsquellen 11, 12, 13 angeordneten Blenden 33, 34, 35 auf der Oberfläche eines Gegenstandes 20 ab, der in dem vor dem Gehäuse 21 befindlichen Lesebereich 18 angeordnet ist und die zu lesenden Farbmarkierungen 19a, 19b und 19c trägt.

Von der Oberfläche des Gegenstandes 20 werden die Sendelichtbündel zurück zum Objektiv 22 gestreut, wobei der Teil 56 des den gesamten Querschnitt des Objektivs 22 einnehmenden Empfangslichtbündels, der nicht auf den zentralen Spiegelbelag 31 fällt, durch die transparente Platte 30 hindurchgeht und über das Linsensystem 23, 24 auf das Photoelement 26 auftrifft, vor dem die Blende 25 mit quadratischer Öffnung angeordnet ist. Die Länge der Platte 30 nach oben ist im wesentlichen durch das obere Ende des Spiegelbelages 31 begrenzt, so daß ein Teil des Empfangslichtes oben an der Platte 30 vorbei zum Linsensystem 23, 24 gelangt.

Das ebenfalls quadratische Photoelement 26 gibt somit ein elektrisches Signal ab, welches für die empfangene Lichtintensität repräsentativ ist. Das vom Photoelement 26 abgegebene elektrische Signal wird zunächst im Vorverstärker 45 (Fig. 1) verstärkt und einer Sample & Hold-Stufe zugeführt sowie zwecks digitaler Weiterverarbeitung über einen Analog-Digital-Wandler geführt.

In dem EEPROM 48 sind die eingelernten Signalpegel bzw. die daraus berechneten oberen und unteren Schwellenwerte (entsprechend der gewählten Toleranz und Hysterese) abgelegt sowie die Systemsoftware.

In der Grundeinstellung liefert der Empfänger bei einem vorgegebenen Grauwertmuster (z.B. 90% Remission) für alle drei Sendeimpulse einen gleichen Signalpegel. Für eine beliebige Farbvorlage wird im RUN-Modus geprüft, ob die drei Empfangssignale mit der zuvor eingelernten Farbe des Vergleichsmusters übereinstimmen. Übereinstimmung ist dann erreicht, wenn der aktuelle Signalpegel innerhalb eines Toleranzbandes liegt. Dieses Toleranzband wird im Teach-Modus entsprechend der Größe der jeweiligen Farbwerte, der daraus abgeleiteten erforderlichen Schalthysterese (abhängig von den Rauschverhältnissen) und der Stellung des Toleranzschalters ermittelt.

Im RUN-Modus wird auf den bereits im Teach-Modus vorbestimmten maximalen Farbwert normiert. Die Normierung auf den im Teachvorgang ermittelten maximalen Farbwert bietet folgende Vorteile:
- Signalschwankungen durch unterschiedliche Tastebenen bzw. durch die Temperaturabhängigkeit der Strahlstärke der einzelnen Strahlungsquellen werden eliminiert, sofern sich die Schwankungen für alle Strahlungsquellen gleichartig verhalten.
- Nichtfarbige Objekte bzw. unterschiedlich gesättigte Farbwerte sind aus dem Normierungsergebnis unmittelbar ableitbar und werden korrekt erkannt.
- Höchste Auflösung bezüglich Farbsättigung.
- Zeitoptimales Normierungsverfahren.
- Geringer Einfluß des Rauschpegels.

Die erfindungsgemäße Farbsensoranordnung ist aufgrund der Verwendung von Halbleiterstrahlungsquellen sehr langlebig. Von besonderem Vorteil ist die einer Anpassung an verschiedene Aufgaben vorgesehene Teach-In-Taste. Aufgrund der Kollimation der Sendestrahlung ist eine hohe Tiefenschärfe gewährleistet. Es können für die Halbleiterstrahlungsquellen hohe Schaltfrequenzen verwendet werden.

Durch Auswechslung des Objektivs 22 kann die Farbsensoranordnung für mindestens zwei Tastweiten, z.B. 10 mm und 60 mm, ausgelegt werden.

Die erfindungsgemäße Autokollimationsanordnung ermöglicht den Aufbau eines äußerst kompakten Sensors bei großer relativer Öffnung.

Das IR-Sperrfilter 52 im Empfangspfad (Fig. 2) dient der Fremdlichtunterdrückung. Hierzu ist auch der sequentielle, gepulste Betrieb der Halbleiterstrahlungsquellen 11, 12, 13 von Vorteil. Zweckmäßigerweise findet erfindungsgemäß eine logische Verknüpfung von zwei bzw. mehreren Signalzyklen statt.

Die Spiegelbeläge 31, 31' werden bevorzugt im Wege der Teilbedampfung eines transparenten Trägers (Glasplatte) verwirklicht, wobei die Außenkontur des Spiegelbelages 31 die Symmetrie des Sendepfades zum Empfangspfad ohne weitere Ausblendung herstellt.

Erfindungsgemäß sind alle optischen und optoelektronischen Komponenten an einem einzigen Gehäuse (Tubus 36/Aufnahmeansatz 37) befestigt.

Der Tubus 36 und der Aufnahmeansatz 37 sind als ein einteiliges Präzisionsspritzteil gefertigt, so daß die Positionen der Komponenten eindeutig bestimmt sind.

Die Halbleiterstrahlungsquellen 11, 12, 13 und die Linsen 32, 23, 24 sind durch Andrücken an einen Anschlag mittels Verdrängungsnasen präzise fixiert. Die korrekte Position der Linsen und Spiegel wird über die spezielle Formgebung (Ausformungen 60) des Deckels 43 beim Aufbringen des Deckels kontrolliert und sichergestellt.

Die vor den Halbleiterstrahlungsquellen 11, 12, 13 angeordneten Blenden 33, 34, 35 werden auf den Gegenstand 20 abgebildet, wodurch ein randscharfer Bildpunkt erhalten wird.

Bei der alternativen Ausführungsform mit dem kreisringförmigen Spiegelbelag 31' (Fig. 2) wäre das Objektiv gegenüber Fig.2 um 90° nach links zu kippen, wobei die optische Achse 29 des Objektivs mit der optischen Achse 16 der Kollimatorlinse 32 in Ausrichtung zu bringen ist. Bei dieser Ausführungsform geht das Sendelicht zunächst durch den zentralen Bereich der transparenten Platte 30 hindurch, während das Empfangslicht vom Spiegelbelag 31' in das Linsensystem 23, 24 gespiegelt wird.

Bei einem bevorzugten Verhältnis der Pupillendurchmesser (Objektivlinse 22 zur Kollimatorlinse 32) von 2,5 bringt die Verwendung eines geometrischen Strahlteilers 28 im Vergleich zum physikalischen Strahlteiler mehr als 60% Signalgewinn.

## Patentansprüche

1. Farbsensoranordnung zum Lesen farbiger Markierungen, insbesondere von farbigen Codes und/oder Druckmarken mit mehreren, vorzugsweise drei in einem Gehäuse (21) angeordneten Halbleiterstrahlungsquellen (11, 12, 13) mit unterschiedlichen Spektralbereichen, vorzugsweise rot, grün bzw. blau, deren Strahlung durch wenigstens einen, vorzugsweise zwei auf die gespiegelte bzw. durchgelassene Strahlung abgestimmte dichroitische Umlenkspiegel (14, 15) zunächst auf eine gemeinsame optische Achse (16) und dann über ein am Gehäuse (21) vorgesehenes Objektiv (22) in einen Lesebereich (18) gelenkt ist und welche von einer Ansteuerelektronik (17) angesteuert sind, und mit einer im Gehäuse (21) vorgesehenen photoelektrischen Strahlungsempfangsanordnung (22,23,24), die aus dem Lesebereich (18) zurückgeworfene Strahlung empfängt und einer Auswerteelektronik (27) zuführt, welche die empfangene Strahlung auswertet,
**dadurch gekennzeichnet,**
**dass** die Strahlungsempfangsanordnung aus dem die Sendestrahlung in den Lesebereich (18) übertragenden Objektiv (22), einem vom Lesebereich (18) aus gesehen dahinter angeordneten geometrischen Strahlteiler (28), welcher innerhalb des Gehäuses (21) Sende- und Empfangsstrahlung trennt, einem hinter dem Strahlteiler (28) vorgesehenen Linsensystem (23, 24) und einem Photoelement (26) besteht, welches die durch den Strahlteiler (28) hindurch auf das Linsensystem (23, 24) treffende und vom Linsensystem (23, 24) konzentrierte Empfangsstrahlung aufnimmt, um daraus ein entsprechendes elektrisches Signal zu bilden, welches der Auswerteelektronik (27) zugeführt ist und dass alle optischen und optoelektronischen Bauelemente (11 bis 15, 23 bis 26, 28, 32 bis 35) gegebenenfalls mit Ausnahme des Objektivs (22) in einem Tubus (36) mit einem seitlichen, einen Hohlraum (42) aufweisenden Aufnahmeansatz (37) untergebracht sind.

2. Farbsensoranordnung nach Anspruch 1,
**dadurch gekennzeichnet,**
**dass** der Strahlteiler (28) eine vorzugsweise unter einem Winkel von ungefähr 45° zur gemeinsamen optischen Achse (16) der Halbleiterstrahlungsquellen (11, 12, 13) und zur Objektivachse (29) angeordnete transparente planparallele Platte (30) ist, die bereichsweise mit einem Spiegelbelag (31, 31') für die Sende- oder Empfangsstrahlung versehen ist, wobei insbesondere für die Sendestrahlung der Spiegelbelag (31) in Verlängerung der gemeinsamen Achse (16) zentral an der Platte (30) und das Objektiv (22) unter einem rechten Winkel zur gemeinsamen Achse (16) vorgesehen ist oder für die Empfangsstrahlung der Spiegelbelag (31') als Ring um den in der Verlängerung der gemeinsamen Achse (16) liegenden zentralen Bereich der Platte (30) und das Objektiv (22) in Richtung der gemeinsamen Achse (16) vorgesehen ist.

3. Farbsensoranordnung nach einem der vorhergehenden Ansprüche,
**dadurch gekennzeichnet,**
**dass** eine Halbleiterstrahlungsquelle (11) auf der gemeinsamen Achse (16) angeordnet ist, wobei insbesondere wenigstens eine weitere Halbleiterstrahlungsquelle (12; 13) zumindest im wesentlichen senkrecht zur gemeinsamen Achse und auf der dem Empfangs-Linsensystem (23, 24) zugewandten Seite des bzw. der dichroitischen Umlenkspiegel (14; 15) vorgesehen ist.

4. Farbsensoranordnung nach Anspruch 3 mit drei Halbleiterstrahlungsquellen (11, 12, 13),
**dadurch gekennzeichnet,**
**dass** zwischen der ersten Halbleiterstrahlungsquelle (11) und dem Strahlenteiler (28) hintereinander zwei dichroitische Spiegel (14, 15) und auf deren dem Empfangslinsensystem (23, 24) zugewandten Seiten in Richtung der gemeinsamen Achse (16) versetzt zwei Halbleiterstrahlungsquellen (12, 13) in entsprechendem Abstand neben- bzw. übereinander angeordnet sind, wobei insbesondere die zweite und dritte Halbleiterstrahlungsquelle (12; 13) in Richtung der Objektivachse (29) um ein solches Stück versetzt sind, dass der optische Weg von jeder Halbleiterstrahlungsquelle (12; 13) zum Strahlenteiler (28) zumindest im wesentlichen gleich ist.

5. Farbsensoranordnung nach einem der vorhergehenden Ansprüche, **dadurch gekennzeichnet,**
**dass** auf der gemeinsamen Achse (16) vor dem Strahlenteiler (28) und nach den dichroitischen Spiegeln (14, 15) eine Kollimationslinse (32) für die Sendestrahlung vorgesehen ist, und/oder dass unmittelbar vor jeder Halbleiterstrahlungsquelle (11, 12, 13) Lochblenden (33, 34, 35) vorgesehen sind, welche auf den Gegenstand (20) im Lesebereich (18) abgebildet sind und vorzugsweise bei geringem Tastabstand (A) von z.B. 10 mm eine rechteckige Öffnung, und bei größerem Tastabstand (A) von z.B. 60 mm eine abgerundete, insbesondere kreisförmige Öffnung aufweist.

6. Farbsensoranordnung nach einem der vorhergehenden Ansprüche, **dadurch gekennzeichnet,**
**dass** die Halbleiterstrahlungsquellen (11, 12, 13) und die dichroitischen Spiegel (14, 15) in dem Aufnahmeansatz (37) untergebracht sind, welcher zu diesem Zweck eine in der Verlängerung der gemeinsamen Achse (16) liegende Aufnahmeöffnung (38), vorzugsweise nutenförmige Halterungen (41) für die dichroitischen Spiegel (14, 15) und in Richtung des Linsensystems (23, 24) vom Hohlraum (42) abzweigende Aufnahmeöffnungen (39, 40, 40') für die senkrecht zur gemeinsamen Achse (16) angeordneten Halbleiterstrahlungsquellen (12, 13) aufweist.

7. Farbsensoranordnung nach Anspruch 6,
**dadurch gekennzeichnet,**
**dass** der Tubus (36) und der an ihn angrenzende Aufnahmeansatz (37) jeweils im wesentlichen Quaderform haben und als seitlich durch einen Deckel (43) verschlossener Kasten ausgebildet sind, wobei der Aufnahmeansatz (37) entsprechend dem geringeren Durchmesser des Sendelichtbündels (55) relativ zum Empfangslichtbündel (56) schmaler als der Tubus (36) ausgebildet ist und zwischen dem Kastenteil des Tubus (36) und dem Aufnahmeansatz (37) sowie im Deckel (43) eine entsprechende Stufe (59 bzw. 60) vorgesehen ist.

8. Farbsensoranordnung nach Anspruch 7,
**dadurch gekennzeichnet,**
**dass** die optischen und optoelektronischen Bauelemente mit Ausnahme der Halbleiterstrahlungsquellen (11, 12, 13) eine im wesentlichen der Kastenform angepasste Rechteckform besitzen.

9. Farbsensoranordnung nach Anspruch 8,
**dadurch gekennzeichnet,**
**dass** die Linsen (23, 24, 32) kreisförmig sind, jedoch rechteckförmige Ansätze (23', 23"; 24', 24"; 32', 32") aufweisen, die komplementär zu in Deckelaufsetzrichtung verlaufenden Haltenuten (57) in den Wänden des Tubus (36) ausgebildet sind.

10. Farbsensoranordnung nach einem der vorhergehenden Ansprüche, **dadurch gekennzeichnet,**
**dass** die elektronischen und optoelektronischen Bauelemente (17, 27, 45, 46, 47) zumindest weitgehend auf Leiterplatten (44) angeordnet sind, die neben den optischen und optoelektronischen Bauelementen, insbesondere neben dem Tubus (36) und dem Aufnahmeansatz (37) untergebracht sind, und zwar vorzugsweise in dem durch die schmälere Ausbildung des Aufnahmeansatzes (37) geschaffenen Raum (58) innerhalb des quaderförmigen Gehäuses (21).

11. Farbsensoranordnung nach einem der vorhergehenden Ansprüche, **dadurch gekennzeichnet,**
**dass** die Ansteuerelektronik (17) und/oder die Auswerteelektronik (27) ebenfalls im Gehäuse (21) angeordnet ist bzw. sind.

12. Farbsensoranordnung nach einem der vorhergehenden Ansprüche, **dadurch gekennzeichnet,**
**dass** die Halbleiterstrahlungsquellen (11, 12, 13) sequentiell angesteuert sind.

## Claims

1. A colour sensor arrangement for reading coloured marks, in particular coloured codes and/or printed marks comprising a plurality of, preferably three, semi-conductor radiation sources (11, 12, 13) having different spectral ranges, preferably red, green and blue, which are arranged in a housing (21) and whose radiation is deflected by at least one, preferably two, dichroic deviation mirrors (14, 15) matched to the specularly reflected or transmitted radiation first onto a common optical axis (16) and then via a objective (22) provided at the housing (21) into a reading zone (18) and which are controlled by an electronic control system (17), and having a photoelectrical radiation receiving arrangement (22, 23, 24) which is provided in the housing (21) and which receives radiation reflected from the reading zone (18) and delivers it to an electronic evaluation system (27) which evaluates the radiation received, **characterised in that** the radiation receiving arrangement consists of the objective (22) transmitting the transmitted radiation into the reading zone (18), a geometrical beam splitter (28) which, seen from the reading zone (18), is arranged behind it and which splits the transmitted radiation and the received radiation inside the housing (21), a lens system (23, 24) provided behind the beam splitter (28) and a photo element (26) which detects the received radiation incident through the beam splitter (28) onto the lens system (23, 24) and concentrated by the lens system (23, 24) to form from it a corresponding electrical signal which is supplied to the electronic evaluation system (27); and **in that** all optical and opto-electronic components (11 to 15, 23, to 26, 28, 32 to 35) are optionally accommodated, with the exception of the objective (22) in a tube (36) with a laterally projecting mount (37) having a cavity (42).

2. A colour sensor arrangement in accordance with claim 1,
**characterised in that** the beam splitter (28) is a transparent plane parallel plate (30) which is preferably arranged at an angle of approximately 45° with respect to the common optical axis (16) of the semi-conductor radiation sources (11, 12, 13) and the objective axis (29) and which is regionally provided with a mirror coating (31, 31') for the transmitted radiation or the received radiation, with the mirror coating (31) being provided in an extension of the common axis (16) centrally at the plate (30), in particular for the transmitted radiation, and the objective (22) being provided at a right angle to the common axis (16) or with the mirror coating (31') being provided as a ring around the central region of the plate (30) disposed in the extension of the common axis (16), for the received radiation, and the objective (22) being provided in the direction of the common axis (16).

3. A colour sensor arrangement in accordance with any one of the preceding claims, **characterised in that** a semi-conductor radiation source (11) is arranged on the common axis (16), with in particular at least one further semi-conductor radiation source (12; 13) being provided at least substantially perpendicular to the common axis and on the side of the dichroic deviation mirror or mirrors (14; 15) facing the receiving lens system (23, 24).

4. A colour sensor arrangement in accordance with claim 3 having three semi-conductor radiation sources (11, 12, 13), **characterised in that** two dichroic mirrors (14, 15) are arranged in series between the first semi-conductor radiation source (11) and the beam splitter (28) and two semi-conductor radiation sources (12, 13) are arranged offset in the direction of the common axis (16) at a corresponding spacing next to one another or above one another at the sides of said dichroic mirrors (14, 15) adjacent to the receiving lens system (23, 24), with in particular the second and third semi-conductor radiation sources (12; 13) being offset in the direction of the objective axis (29) by a distance such that the optical path of each semi-conductor radiation source (12; 13) to the beam splitter (28) is at least substantially the same.

5. A colour sensor arrangement in accordance with any one of the preceding claims, **characterised in that** a collimator lens (32) for the transmitted radiation is provided on the common axis (16) before the beam splitter (28) and after the dichroic mirrors (14, 15); and/or **in that** aperture diaphragms (33, 34, 35) are provided directly in front of each semi-conductor radiation source (11, 12, 13), are imaged on the article (20) in the reading zone (18) and preferably have a rectangular aperture with a low scanning distance (A) of, e.g., 10 mm and have a rounded, in particular circular aperture with a larger scanning distance (A) of, e.g., 60 mm.

6. A colour sensor arrangement in accordance with any one of the preceding claims, **characterised in that** the semi-conductor radiation sources (11, 12, 13) and the dichroic mirrors (14, 15) are accommodated in the projecting mount (37) which has, for this purpose, a receiving opening (38) disposed in the extension of the common axis (16), preferably groove-like holders (41) for the dichroic mirrors (14, 15) and receiving openings (39, 40, 40'), which branch off from the cavity (42) in the direction of the lens system (23, 24) for the semi-conductor radiation sources (12, 13) arranged perpendicular to the common axis (16).

7. A colour sensor arrangement in accordance with claim 6,
**characterised in that** the tube (36) and the projecting mount (37) adjoining it each have substantially a parallelepiped form and are made as a box closed by a cover (43) at the side, with the projecting mount (37) being made narrower than the tube (36) in accordance with the lower diameter of the transmitted light bundle (55) relative to'the received light bundle (56) and a corresponding step (59 or 60) being provided between the box part of the tube (36) and the projecting mount (37) and in the cover (43).

8. A colour sensor arrangement in accordance with claim 7,
**characterised in that** the optical and opto-electronic components, with the exception of the semi-conductor sources (11, 12, 13), have a rectangular shape substantially matched to the box shape.

9. A colour sensor arrangement in accordance with claim 8,
**characterised in that** the lenses (23, 24, 25) are circular, but have rectangular lugs (23', 23", 24', 24", 32', 32") which are made complementary to holding grooves (57) in the walls of the tube (36) which extend in the direction the cover is placed on.

10. A colour sensor arrangement in accordance with any one of the preceding claims, **characterised in that** the electronic and opto-electronic components (17, 27, 45, 46, 47) are at least largely arranged on printed circuit boards (44) which are accommodated next to the optical and opto-electronic components, in particular next to the tube (36) and to the projecting mount (37), and indeed preferably in the space (58) inside the housing (21) of parallelepiped shape provided by the narrower design of the projecting mount (37).

11. A colour sensor arrangement in accordance with any one of the preceding claims, **characterised in that** the electronic control system (17) and or the electronic evaluation system (27) is or are likewise arranged in the housing (21).

12. A colour sensor arrangement in accordance with any one of the preceding claims, **characterised in that** the semi-conductor radiation sources (11, 12, 13) are controlled sequentially.

## Revendications

1. Agencement de détecteurs de couleur pour lire des marquages en couleur, notamment des codes et/ou des marques imprimées comprenant plusieurs, de préférence trois sources de rayonnement à semi-conducteurs (11, 12, 13) avec différentes régions spectrales, de préférence rouge, verte ou bleu, disposées dans un boîtier (21), dont le rayonnement est d'abord orienté sur un axe optique commun (16) à l'aide d'au moins un, de préférence deux miroirs de renvoi dichroïques (14, 15) accordés sur le rayonnement réfléchi ou passant, puis à l'aide d'un objectif (22) prévu sur le boîtier (21) dans une zone de lecture (18), et qui sont commandées par une électronique de commande (17), et comprenant un dispositif récepteur de rayonnement photoélectrique (22, 23, 24) prévu à l'intérieur du boîtier (21), qui reçoit le rayonnement réfléchi depuis la zone de lecture (18) et le transmet vers une électronique d'analyse, qui analyse le rayonnement reçu,
**caractérisé en ce que**
le dispositif récepteur de rayonnement comprend l'objectif (22) transmettant le rayonnement émis dans la zone de lecture (18), un diviseur de rayons (28) géométrique disposé en aval de l'objectif (22) vu depuis la zone de lecture (18), qui à l'intérieur du boîtier (21) divise les rayonnements émis et reçus, un système à lentilles (23, 24) prévu en aval du diviseur de rayons (28), et une cellule photovoltaïque (26), qui capte le rayonnement reçu passant à travers le diviseur de rayons (28) sur le système à lentilles (23, 24) et concentré par le système à lentilles (23, 24) pour ainsi générer un signal électrique correspondant, qui est transmis à l'électronique d'analyse (27), et **en ce que** tous les composants optiques et optoélectroniques (11 à 15, 23 à 26, 28, 32 à 35), éventuellement à l'exception de l'objectif (22), sont logés dans un tube (36) pourvu d'une saillie de logement (37) latérale présentant un espace creux (42).

2. Agencement de détecteurs de couleur selon la revendication 1,
**caractérisé en ce que**
le diviseur de rayons (28) est une plaque (30) à faces planes et parallèles transparente disposée de préférence sous un angle de 45° environ par rapport à l'axe optique (16) commun des sources de rayonnement à semi-conducteurs (11, 12, 13) et à l'axe de l'objectif (29), plaque pourvue partiellement d'une couche réfléchissante (31, 31') pour les rayonnements émis ou reçus, la couche réfléchissante (31), notamment pour le rayonnement émis, étant prévue en prolongation de l'axe commun (16) au centre de la plaque (30), et l'objectif (22) étant prévu sous un angle droit par rapport à l'axe commun (16), ou pour le rayonnement reçu, la couche réfléchissante (31') étant prévue en tant qu'anneau autour de la zone centrale de la plaque (30) située dans le prolongement de l'axe commun (16), et l'objectif (22) étant prévu dans le sens de l'axe commun (16).

3. Agencement de détecteurs de couleur selon l'une quelconque des revendications précédentes,
**caractérisé en ce**
**qu'**une source de rayonnement à semi-conducteurs (11) est disposée sur l'axe commun (16), notamment au moins une autre source de rayonnement à semi-conducteurs (12 ; 13) étant prévue, au moins pour l'essentiel, verticalement à l'axe commun et sur la face opposée au système récepteur à lentilles (23, 24) du ou des miroir(s) de renvoi dichroïque(s) (14 ; 15).

4. Agencement de détecteurs de couleur selon la revendication 3, comprenant trois sources de rayonnement à semi-conducteurs (11, 12, 13),
**caractérisé en ce**
**qu'**entre la première source de rayonnement à semi-conducteurs (11) et le diviseur de rayons (28) sont disposés l'un derrière l'autre deux miroirs dichroïques (14, 15) et, sur la face de ceux-ci orientée vers le système récepteur à lentilles (23, 24) dans le sens de l'axe commun (16), deux sources de rayonnement à semi-conducteurs (12, 13) décalées à une distance appropriée l'une à côté de l'autre ou l'une sur l'autre, notamment la deuxième et la troisième sources de rayonnement à semi-conducteurs (12 ; 13) étant décalées dans le sens de l'axe d'objectif (29) d'une telle distance, que la trajectoire optique de chaque source de rayonnement à semi-conducteurs (12 ; 13) vers le diviseur de rayons (28) est pour l'essentiel la même.

5. Agencement de détecteurs de couleur selon l'une quelconque des revendications précédentes,
**caractérisé en ce que**
sur l'axe commun (16), en amont du diviseur de rayons (28) et en aval des miroirs dichroïques (14, 15), est prévue une lentille de collimateur (32) pour le rayonnement émis, et/ou **en ce qu'**immédiatement avant chaque source de rayonnement à semi-conducteurs (11, 12, 13) des diaphragmes à trou (33, 34, 35) sont prévus, qui sont représentés sur l'objet (20) dans la zone de lecture (18) et qui de préférence, en cas d'une distance de balayage (A) réduite de 10mm par exemple, présentent une ouverture rectangulaire, et en cas de distance de balayage (A) plus importante de 60mm par exemple, présentent une ouverture arrondie, notamment circulaire.

6. Agencement de détecteurs de couleur selon l'une quelconque des revendications précédentes,
**caractérisé en ce que**
les sources de rayonnement à semi-conducteurs (11, 12, 13) et les miroirs dichroïques (14, 15) sont logés dans la saillie de logement (37) qui à cet effet présente une ouverture de logement (38) située dans le prolongement de l'axe commun (16), des supports (41) de préférence en forme de rainures pour les miroirs dichroïques (14, 15) ainsi que des ouvertures de logement (39, 40, 40') s'étendant depuis l'espace creux (42) vers le système à lentilles (23, 24), destinées aux sources de rayonnement à semi-conducteurs (12, 13) disposées verticalement à l'axe commun (16).

7. Agencement de détecteurs de couleur selon la revendication 6,
**caractérisé en ce que**
le tube (36) et la saillie de logement (37) adjacente à ce dernier présentent respectivement pour l'essentiel une forme parallélépipédique, et qu'ils sont configurés en caisson latéralement fermé par un couvercle (43), la saillie de logement (37) étant configurée plus étroitement que le tube (36) en fonction du diamètre plus réduit du faisceau de lumière émise (55) par rapport au faisceau de lumière reçue (56), et **en ce qu'**entre la partie en caisson du tube (36) et la saillie de logement (37) ainsi que dans le couvercle (43) un palier (59 ou 60) correspondant est prévu.

8. Agencement de détecteurs de couleur selon la revendication 7,
**caractérisé en ce que**
les composants optiques et optoélectroniques, à l'exception des sources de rayonnement à semi-conducteurs (11, 12, 13), présentent une forme rectangulaire pour l'essentiel adaptée à la forme en caisson.

9. Agencement de détecteurs de couleur selon la revendication 8,
**caractérisé en ce que**
les lentilles (23, 24, 32) sont circulaires mais présentent des saillies rectangulaires (23', 23'' ; 24', 24'' ; 32', 32'') complémentaires des rainures de maintien (57) s'étendant dans le sens de la mise en place du couvercle dans les parois du tube (36).

10. Agencement de détecteurs de couleur selon l'une quelconque des revendications précédentes,
**caractérisé en ce que**
les composants électroniques et optoélectroniques (17, 27, 45, 46, 47), du moins en grande partie, sont disposés sur des plaquettes à circuits imprimés (44), qui sont logées à côte des composants optiques et optoélectroniques et notamment à côté du tube (36) et de la saillie de logement (37), à savoir de préférence dans l'espace (58) créé par la configuration plus étroite de la saillie de logement (37) à l'intérieur du boîtier de forme parallélépipédique (21).

11. Agencement de détecteurs de couleur selon l'une des revendications précédentes,
**caractérisé en ce que**
l'électronique de commande (17) et/ou l'électronique d'analyse (27) est ou sont également disposée(s) dans le boîtier (21).

12. Agencement de détecteurs de couleur selon l'une des revendications précédentes,
**caractérisé en ce que**
les sources de rayonnement à semi-conducteurs (11, 12, 13) sont commandées de façon séquentielle.
